# EUROPÄISCHE PATENTANMELDUNG

(11) **EP 4 699 710 A1**
(43) Veröffentlichungstag der Anmeldung: **25.02.2026**
(21) Anmeldenummer: 25197061.2
(22) Anmeldetag: 20.08.2025
(51) Int. Cl.: B06B 1/02, G01S 7/524

(54) **VORRICHTUNG ZUR ANSTEUERUNG EINES ULTRASCHALL-TRANSDUCERS ZUR ERZEUGUNG VON ULTRASCHALLWELLEN**

(30) Priorität: 21.08.2024 DE 102024123934
(71) Anmelder: Elmos Semiconductor SE, 51379 Leverkusen (DE)
(72) Erfinder: Kreiß, Dennis, 30559 Hannover (DE); Schmidt, André, 51674 Wiehl (DE); Heppekausen, Stefanie, 45239 Essen (DE)
(74) Vertreter: dompatent

(57) **Zusammenfassung**

Die Vorrichtung zur Ansteuerung eines Ultraschall-Transducers (12) zur Erzeugung von Ultraschallwellen ist versehen mit einer Ansteuereinheit (16) mit Eingangsanschlüssen zur Verbindung mit einer Energiequelle und mit Ausgangsanschlüssen (DRV1, DRV2) zur Ausgabe eines Ansteuersignals für den Betrieb eines Ultraschall-Transducers (12), die Ansteuereinheit (16) erzeugt ein Wechselansteuersignal, das eine vorgebbare Frequenz und damit eine vorgebbare Periode und eine hinsichtlich ihrer Größe veränderbare Amplitude aufweist, und gibt dieses Wechselansteuersignal innerhalb zeitlich vorgebbarer Intervalle und innerhalb jedes Intervalls für eine vorgebbare Anzahl an Perioden aus. Mit dem Beginn der Erzeugung und/oder der Ausgabe des Wechselansteuersignals steigt die Amplitude von eine vorgebbaren ersten Minimalamplitudenwert bis auf einen vorgebbaren Maximalamplitudenwert an, um zum Ende der Erzeugung bzw. Ausgabe des Wechselansteuersignals hin von dem Maximalamplitudenwert auf eine zweiten Minimalamplitudenwert abzufallen, und zwar in beiden Fällen langsamer als in dem Fall, in dem die Energiequelle zur Erzeugung des Wechselansteuersignals schlagartig ein- und schlagartig ausgeschaltet wird.

## Beschreibung

Die Erfindung betrifft eine Vorrichtung zur Ansteuerung eines Ultraschall-Transducers zur Erzeugung von Ultraschallwellen.

Typischerweise werden für die Umfeld-Überwachung eines Fahrzeuges mehrere Ultraschall-Sensoren mit jeweils einem Ultraschall-Transducer inklusive Ansteuerung und Signalauswertung bzw. Signalvorverarbeitung eingesetzt. Von Vorteil für die Genauigkeit der Umfeldüberwachung ist es, wenn sämtliche Ultraschall-Transducer Schallwellen mit im Wesentlichen dem gleichen Schalldruck aussenden.

Im Stand der Technik (siehe z.B. US-A-2014/312968, US-A-2024/001404 und US-B-11 121 682) wird die Energieversorgung für die intermittierende Ansteuerung eines Ultraschall-Transducer mehr oder wenige schlagartig aktiviert und für die Beendigung des Ansteuerungssignals schlagartig deaktiviert. Dies bringt mitunter EMV-Abstrahlungsprobleme mit sich, die sich durch einen erhöhten Schutz zur Reduzierung der EMV-Abstrahlung mindern lassen, was aber mit Problemen verbunden ist, zumal diese EMV-Abstrahlung auf der zu den Sensoren führenden Versorgungsleitungen des Fahrzeugs auftreten.

Aufgabe der Erfindung ist es insoweit, eine Vorrichtung zu Ansteuerung eines Ultraschall-Transducers zur Erzeugung von Ultraschallwellen zu schaffen, bei der EMV-Abstrahlungen reduziert sind.

Zur Lösung dieser Aufgabe wird mit der Erfindung eine Vorrichtung zur Ansteuerung eines Ultraschall-Transducers zur Erzeugung von Ultraschallwellen geschaffen, wobei die Vorrichtung versehen ist mit
- einer Ansteuereinheit mit Eingangsanschlüssen zur Verbindung mit einer Energiequelle und mit Ausgangsanschlüssen zur Ausgabe eines Ansteuersignals für den Betrieb eines Ultraschall-Transducers,
- wobei die Ansteuereinheit ein Wechselansteuersignal, das eine vorgebbare Frequenz und damit eine vorgebbare Periode und eine hinsichtlich ihrer Größe veränderbare Amplitude aufweist, erzeugt und dieses Wechselansteuersignal innerhalb zeitlich vorgebbarer Intervalle und innerhalb jedes Intervalls für eine vorgebbare Anzahl an Perioden ausgibt, und
- wobei pro Intervall
   - die Amplitude des Wechselansteuersignals mit dem Beginn seiner Ausgabe über einen Zeitraum von 1 % bis 50 % seiner Anzahl an Perioden oder 5 % bis 50% oder 10 % bis 50% oder 20 % bis 50 % oder 30 % bis 50 % oder 40 % bis 50 % oder 1 % bis 5 % oder 1 % bis 10 % oder 1 % bis 15 % oder 1 % bis 20 % oder 1 % bis 25 % oder 1 % bis 30 % oder 1 % bis 35 % oder 1 % bis 40 % oder 1 % bis 45 % seiner Anzahl an Perioden von einer vorgebbaren ersten Minimalamplitude, die insbesondere Null beträgt, bis zu einer vorgebbaren Maximalamplitude ansteigt und zum Ende der Ausgabe des Wechselansteuersignals hin über mindestens 1 % bis 50 % seiner Anzahl an Perioden oder 5 % bis 50% oder 10 % bis 50% oder 20 % bis 50 % oder 30 % bis 50 % oder 40 % bis 50 % oder 1 % bis 5 % oder 1% bis 10 % oder 1 % bis 15 % oder 1 % bis 20 % oder 1 % bis 25 % oder 1 % bis 30 % oder 1 % bis 35 % oder 1 % bis 40 % oder 1 % bis 45 % seiner Anzahl an Perioden von der Maximalamplitude bis auf eine vorgebbare zweite Minimalamplitude, die insbesondere Null beträgt, abfällt,
      oder
   - die Amplitude des Wechselansteuersignals mit dem Beginn seiner Ausgabe über einen Zeitraum von 10 µs bis 50 µs oder von 10 µs bis 100 µs oder von 10 µs bis 200 µs von einer vorgebbaren ersten Minimalamplitude, die insbesondere Null beträgt, bis zu einer vorgebbaren Maximalamplitude ansteigt und zum Ende der Ausgabe des Wechselansteuersignals hin über einen Zeitraum von 10 µs bis 50 µs oder von 10 µs bis 100 µs oder von 10 µs bis 200 µs von der Maximalamplitude bis auf eine vorgebbare zweite Minimalamplitude, die insbesondere Null beträgt, abfällt.

Erfindungsgemäß ist vorgesehen, das Ansteuersignal für den Betrieb des Ultraschall-Transducers gemäß einer Anstiegsrampe langsamer ansteigen bzw. gemäß einer Abfallrampe langsamer abfallen zu lassen, als es durch Ein- und Ausschalten bzw. Aktivieren und Deaktivieren der Energiequelle der Fall ist. Hierzu schlägt die Erfindung vor, die Amplitude des Wechselansteuersignals pro Intervall mit dem Beginn seiner Ausgabe über einen prozentualen Zeitraum der Gesamtlänge des Wechselansteuersignals bis auf einen Maximalwert (Maximalamplitude) zu erhöhen und entsprechend zum Ende des Intervalls hin ebenfalls über einen bestimmten prozentualen Anteil der Gesamtlänge des Wechselansteuersignals von der Maximalamplitude auf insbesondere Null abzusenken. Dies ist oben im Einzelnen weiter ausgeführt.

Erfindungsgemäß steigt also die Amplitude des Wechselansteuersignals pro Ansteuerintervall zum Ansteuern des Transducers zu Beginn langsam an und fällt zum Ende langsam ab. Bekanntlich ist die Amplitude definiert als die maximale Auslenkung einer Schwingung aus der Lage des arithmetischen Mittelwerts. Die maximale Auslenkung des Wechselansteuerungssignals pro Intervall steigt also zu Beginn des Intervalls von kleinen Werten gegebenenfalls von Null bis auf größere Werte an und fällt zum Ende des Intervalls von den größeren Werten auf kleinere Werte, gegebenenfalls bis auf Null, ab.

Der Anstieg und der Abfall der Energieversorgung für die Bereitstellung des Wechselansteuerbetriebssignals für entweder direkt den Ultraschall-Transducer oder aber für einen zwischengeschalteten Transformator, an den der Ultraschall-Transducer angeschlossen ist, kann dabei kontinuierlich, linear, quadratisch oder nach anderen Kurvenverläufen gesteuert sein. Außerdem kann man den Anstieg und den Abfall auch schrittweise durchführen. Es ist ebenfalls möglich, dass Hoch- und Herunterschalten der Energieversorgung anhand der z.B. Pulse des Wechselansteuersignals durchzuführen (beispielsweise indem man bei jedem Viertelpuls, jedem halben Puls, jedem dreiviertel Puls oder jedem ganzen Puls die Energiever-sorgung weiter hochfährt). Auch eine zeitabhängige Hoch- und Herunterschaltung der Energie (beispielsweise jeweils nach einer bestimmten Anzahl von insbesondere µs-Abständen und idealerweise zwischen 1 µs bis 5 µs pro Energiestufe, oder 10 µs bis 50 µs oder 10 µs bis 100 µs oder 10 µs bis 200 µs) sind möglich. Wenn man beispielsweise alle 2 µs den Strom bzw. die Energiezufuhr um eine Stufe erhöht und dies beispielsweise in 64 Stufen durchführt, würde man nach 128 µs die Maximalamplitude erreichen.

Bei dem Wechselansteuersignal kann es sich, wie bereits zuvor gesagt, um einzelne Pulse oder um Sinuswellen handeln, die mit einer bestimmten Frequenz aufeinander folgen, so dass sich entsprechende Perioden des Wechselansteuersignals ergeben. Erfindungsgemäß ist nun in der Anfangs- und der Endphase der Erzeugung bzw. der Ausgabe des Wechselansteuersignals pro Intervall die Höhe/Größe des Wechselansteuersignals variabel, indem es beispielsweise von einem ersten Minimalwert (Minimalamplitude), die insbesondere Null betragen kann, bis auf die Maximalgröße (Maximalamplitude) ansteigt und nach verstreichen einer gewissen Zeit, für die das Wechselansteuersignal seine Maximalamplitude beibehält, von dieser wieder auf insbesondere Null oder allgemeiner ausgedrückt auf einen zweiten Minimalwert (Minimalamplitude) absinkt.

Somit kann also die Amplitude des Wechselansteuersignals pro Periode zwischen Null und einem zwischen seiner ersten und/oder zweiten Minimalamplitude einerseits und seiner Maximalamplitude andererseits liegenden Wert wechseln, oder aber die Amplitude des Wechselansteuersignals kann pro Periode zwischen einem negativen und einem positiven Wert, der jeweils zwischen einerseits seiner ersten und/oder zweiten Minimalamplitude und andererseits seiner Maximalamplitude liegt, wechseln.

Durch den im Vergleich zum "harten" Ein- und Ausschalten der Energiever-sorgung langsameren Anstieg und langsameren Abfall der Größe der Energie wird damit der Ultraschall-Transducer letztendlich mit weniger Energie versorgt als es im Falle des "harten" Ein- und Ausschaltens der Energieversorgung ist. Damit im Vergleich zu diesem letztgenannten Fall nach dem erfindungsgemäßen Verfahren die gleiche Energie für die Umsetzung in Ultraschallwellen eingebracht werden kann, ist gemäß einer vorteilhaften Ausführungsform der Erfindung vorgesehen, dass pro Intervall die Erzeugung des Wechselansteuersignals für diejenige Dauer, für die zu Beginn der Ausgabe des Wechselansteuersignals dessen Amplitude bis zum Erreichen der Maximalamplitude ansteigt, verlängert wird und die Amplitude des Wechselansteuersignals innerhalb dieser Verlängerung von der Maximalamplitude bis auf die zweite Minimalamplitude abfällt.

Sinngemäß wird also der für die Ansteuerung des Ultraschall-Transducers benötigte Strom von typischerweise 200 mA bis 500 mA nicht schlagartig und damit "hart" ein- und ausgeschaltet, sondern kontinuierlich oder auch in einzelnen Stufen und insoweit langsamer erhöht bzw. langsamer verringert als beim bloßen Ein-und Ausschalten. So bietet es sich beispielsweise an, den Strom kontinuierlich über die ersten Pulse eines vom Ultraschall-Transducer abzugebenden Burst-Signals zu erhöhen und über die letzten Pulse des Burst-Signals wieder entsprechend zu verringern.

In dem bereits oben genannten Beispiel der Zwischenschaltung eines Transformators zwischen der Ansteuereinheit und dem Ultraschall-Transducer kann die erfindungsgemäße Vorrichtung ferner umfassen
- einen ersten und einen zweiten Low-Side-Halbleiterschalter, von denen jeder einen wahlweise leitend oder sperrend schaltbaren Strompfad aufweist,
- wobei der Strompfad des ersten Low-Side-Halbleiterschalters zwischen einem der beiden Low-Side-Halbleiterschaltern gemeinsamen ersten Schaltungsknoten und einem ersten primärseitigen Anschluss des Transformators und der Strompfad des zweiten Low-Side-Halbleiterschalters zwischen dem ersten Schaltungsknoten und einem zweiten primärseitigen Anschluss des Transformators angeordnet ist,
- einen ersten und einen zweiten High-Side-Halbleiterschalter, von denen jeder einen wahlweise leitend oder sperrend schaltbaren Strompfad aufweist,
- wobei der Strompfad des ersten High-Side-Halbleiterschalters zwischen einem der beiden High-Side-Halbleiterschaltern gemeinsamen zweiten Schaltungsknoten und dem ersten primärseitigen Anschluss des Transformators und der Strompfad des zweiten High-Side-Halbleiterschalters zwischen dem zweiten Schaltungsknoten und dem zweiten primärseitigen Anschluss des Transformators angeordnet ist,
- wobei die Eingangsanschlüsse der Ansteuereinheit mit den beiden Schaltungsknoten direkt oder indirekt verbunden sind,
- eine Schaltersteuereinheit, die die High-Side-Halbleiterschalter und die Low-Side-Halbleiterschalter alternierend leitend und sperrend schaltet, und
- wobei die Schaltersteuereinheit innerhalb eines Intervalls in einer Ansteuerphase den ersten High-Side-Halbleiterschalter sowie den zweiten Low-Side-Halbleiterschalter leitend und den zweiten High-Side-Halbleiterschalter sowie den ersten Low-Side-Halbleiterschalter sperrend schaltet und in einer anderen Ansteuerphase des Intervalls den zweiten High-Side-Halbleiterschalter sowie den ersten Low-Side-Halbleiterschalter leitend und den ersten High-Side-Halbleiterschalter sowie den zweiten Low-Side-Halbleiterschalter sperrend schaltet und sich diese beiden Ansteuerphasen zur Erzeugung und Ausgabe des Wechselansteuersignals mehrfach wiederholen.

Bei dieser Variante der Erfindung in Kombination mit einem Transformator weist dieser anders als im Stand der Technik üblich und mit Vorteil keine primärseitige Mittenanzapfung auf, was die Herstellung- und Montagekosten des Transformators günstig beeinflusst, da dieser dann nämlich primärseitig keine zwei Wicklungen (Spulen) aufweist mit dem Verbindungspunkt beider Spulen als Mittenanzapfung nach außen geführt. Vielmehr benötigt man primärseitig nur noch eine einzige Spule.

Ausgangspunkt für diese Weiterbildung der Erfindung ist also eine Verbesserung der Ansteuerung eines Ultraschall-Transducers durch Vereinfachung der Konstruktion des Transformators durch die an sich bekannte Verbindung der beiden primärseitigen Anschlüsse des Transformators mit jeweils einem im folgenden Low-Side-Halbleiterschalter genannten Halbleiterschalter, deren Strompfade ausgehend von einem gemeinsamen ersten Schaltungsknoten zu den beiden primärseitigen Anschlüssen führen. Mit den beiden primärseitigen Anschlüssen des Transformators sind mit Vorteil ferner zwei High-Side-Halbleiterschalter verbunden, deren Strompfade ausgehend von den beiden primärseitigen Anschlüssen des Transformators zu einem gemeinsamen zweiten Schaltungsknoten führen. Die Strompfade sämtlicher Halbleiterschalter, bei denen es sich typischerweise um Transistoren handelt, lassen sich nun wechselweise leitend und sperrend schalten, womit durch die primärseitigen Anschlüsse des Transformators und damit durch dessen primärseitige Spule, die zwischen den beiden Reihenschaltungen aus jeweils einem Low-Side-Halbleiterschalter und einem High-Side-Halbleiterschalter angeordnet ist, wechselweise Strom in entgegengesetzten Richtungen fließt.

Nichtsdestotrotz lässt sich das erfindungsgemäße Konzept des langsamen Hochfahrens und langsamen Absenkens der Energie für die Erzeugung des Wechselansteuersignals auch dann nutzen, wenn als Transformator ein solcher mit primärseitiger Mittenanzapfung eingesetzt wird. Die Vorrichtung weist in diesem Fall auf:
- einen ersten und einen zweiten Low-Side-Halbleiterschalter, von denen jeder einen wahlweise leitend oder sperrend schaltbaren Strompfad aufweist,
- wobei der Strompfad des ersten Low-Side-Halbleiterschalters zwischen einem der beiden Low-Side-Halbleiterschaltern gemeinsamen ersten Schaltungsknoten und einem ersten primärseitigen Anschluss des Transformators und der Strompfad des zweiten Low-Side-Halbleiterschalters zwischen dem ersten Schaltungsknoten und einem zweiten primärseitigen Anschluss des Transformators angeordnet ist,
- wobei der Transformator einen weiteren primärseitigen Anschluss aufweist,
- wobei zwischen dem ersten und dem zweiten primärseitigen Anschluss des Transformators eine primärseitige Spule angeordnet ist und der weitere primärseitige Anschluss des Transformators mit der Spule in deren Mitte verbunden ist und somit die primärseitige Spule in zwei Spulenhälften unterteilt ist,
- wobei der weitere primärseitige Anschluss des Transformators und der erste Schaltungsknoten mit den Eingangsanschlüssen der Ansteuereinheit verbunden sind,
- wobei die Eingangsanschlüsse der Ansteuereinheit mit dem weiteren primärseitigen Anschluss des Transformators und dem ersten Schaltungsknoten direkt oder indirekt verbunden sind und
- eine Schaltersteuereinheit, die die beiden Low-Side-Halbleiterschalter wechselweise gegensinnig leitend und sperrend schaltet, womit in der primärseitigen Spule des Transformators wechselweise Strom wechselweise Strom durch jeweils eine andere der beiden Spulenhälften in entgegengesetzten Richtungen fließt.

Schließlich lässt sich das erfindungsgemäße Konzept auch einsetzen, wenn der Ultraschall-Transducer ohne Zwischenschaltung eines Transformators und damit insoweit direkt mit den Ausgangsanschlüssen der Ansteuereinheit verbunden ist.

Die diesbezüglich einsetzbare Vorrichtung umfasst in einem solchen Fall
- einen ersten und einen zweiten Low-Side-Halbleiterschalter, von denen jeder einen wahlweise leitend oder sperrend schaltbaren Strompfad aufweist,
- wobei der Strompfad des ersten Low-Side-Halbleiterschalters zwischen einem der beiden Low-Side-Halbleiterschaltern gemeinsamen ersten Schaltungsknoten und einem ersten Ausgangsanschluss, der mit dem Ultraschall-Transducer verbindbar ist, und der Strompfad des zweiten Low-Side-Halbleiterschalters zwischen dem ersten Schaltungsknoten und einem zweiten Ausgangsanschluss angeordnet ist, der ebenfalls mit dem Ultraschall-Transducer verbindbar ist,
- einen ersten und einen zweiten High-Side-Halbleiterschalter, von denen jeder einen wahlweise leitend oder sperrend schaltbaren Strompfad aufweist,
- wobei der Strompfad des ersten High-Side-Halbleiterschalters zwischen einem der beiden High-Side-Halbleiterschaltern gemeinsamen zweiten Schaltungsknoten und dem ersten Ausgangsanschluss und der Strompfad des zweiten High-Side-Halbleiterschalters zwischen dem zweiten Schaltungsknoten und dem zweiten Ausgangsanschluss angeordnet ist,
- eine Schaltersteuereinheit, die in einer Ansteuerphase eines Intervalls eines Ansteuerzyklus den ersten High-Side-Halbleiter-schalter sowie den zweiten Low-Side-Halbleiterschalter leitend und den zweiten High-Side-Halbleiter-schalter sowie den ersten Low-Side-Halbleiterschalter sperrend schaltet und in einer anderen Ansteuerphase des Intervalls des Ansteuerzyklus den zweiten High-Side-Halbleiterschalter sowie den ersten Low-Side-Halbleiter-schalter leitend und den ersten High-Side-Halbleiterschalter sowie den zweiten Low-Side-Halbleiterschalter sperrend schaltet und sich diese beiden Ansteuerphasen zur Erzeugung und Ausgabe des Wechselansteuersignals mehrfach wiederholen.

In weiterer vorteilhafter Ausgestaltung der Erfindung umfasst die Vorrichtung eine Stromquelle zur Vorgabe eines die Größe der Amplitude des Wechselansteuersignals bestimmenden Stroms, wobei der Strom der Stromquelle pro Intervall für den Anstiege der Amplitude von der ersten Minimalamplitude bis zur Maximalamplitude des Wechselansteuersignals, für die anschließende Beibehaltung der Maximalamplitude des Wechselansteuersignals und für den darauffolgenden Abfall der Amplitude des Wechselansteuersignals von der Maximalamplitude bis zu der zweiten Minimalamplitude steuer- oder regelbar ist.

Wie bereits oben angedeutet kann für die Energieversorgung zur Erzeugung des Wechselansteuersignals und/oder für die Stromquelle ein Tiefpassfilter zur Verzögerung des Anstiegs des Stroms der Stromquelle bei deren Aktivierung oder Einschalten zu Beginn eines Intervalls und zur Verzögerung des Abfalls des Stroms der Stromquelle bei deren Deaktivierung oder Ausschalten zum oder am Ende des Intervalls eingesetzt werden, wobei das Tiefpassfilter extern der Ansteuereinheit angeordnet sein kann und einen Ausgangsanschluss aufweisen kann, mit dem einer der Eingangsanschlüsse der Ansteuereinheit verbindbar ist.

Wie bereits oben dargelegt, kann die Energieversorgung beispielsweise schrittweise hoch- und heruntergefahren werden. Insoweit kann in einer entsprechenden Ausführungsform der Vorrichtung die Erfindung also mindestens zwei Stromquellen zur Vorgabe eines die Größe der Amplitude des Wechselansteuersignals bestimmenden Stroms aufweisen, wobei die Stromquellen pro Intervall für den Anstieg der Amplitude von der ersten Minimalamplitude bis zur Maximalamplitude des Wechselansteuersignals sequentiell zuschaltbar, für die anschließende Beibehaltung der Maximalamplitude des Wechselansteuersignals eingeschaltet bleiben und für den darauffolgenden Abfall der Amplitude des Wechselansteuersignals von der Maximalamplitude bis zur zweiten Minimalamplitude sequentiell abschaltbar sind.

Mit dem erfindungsgemäßen Konzept wird eine sinnvolle und vorteilhafte Alternative zu aktuell im Stand der Technik zu findenden Lösungen vorgeschlagen. Diese bekannten Lösungen verwenden auf dem PCB einen Kondensator als Energiespeicher für die Aussendung eines Ultraschall-Burstsignals. Der Kondensator hat dabei typischerweise eine Kapazität von 50 µF bis 200 µF (je nach erforderlicher Länge des auszusenden Burst-Signals). Dieser vergleichsweise große Kondensator bringt neben dem Vorteil, als Energiespeicher und Supply-Filterung zu dienen, die Nachteile der teuren Anschaffung, des großen Platzbedarfs auf dem PCB und des großen Gewichts mit sich, was schlecht für Vibrationen ist.

Aus kommerziellen und platzbedingten Gründen in dem vergleichsweise kleinen Ultraschall-Sensorgehäuse ist es also wünschenswert, den vergleichsweise großen Elko zu vermeiden. Funktional wäre dies auch ohne weiteres möglich, wenn das Steuergerät den benötigten Strom bereitstellen würde und die EMV Abstrahlung keine Probleme verursachen würde.

Allerdings führt das derzeit verwendete "harte" Ein- und Ausschalten der Strom- bzw. Energiequelle in der Ansteuerschaltung zu schnellen Änderungen im Supply-Strom, die sich nachteilig auf die EMC-Abstrahlung auswirken. Daher wird nun mit der Erfindung der bereits zuvor beschriebene andere Weg beschritten, nämlich den für die Ansteuerschaltung zum Betreiben des Ultraschall-Transducers benötigten Strom zu Beginn eines Ansteuerungsintervalls langsam zu erhöhen und gegen Endes Intervalls wieder langsam abzusenken, womit man gemäß einer Variante der Erfindung mit deutlich kleineren insbesondere externen Filterkomponenten auf eine ähnlich geringe EMC-Abstrahlung kommt, wie nach dem Stand der Technik mit den wesentlich aufwendigeren Lösungsansätzen.

Die Erfindung wird nachfolgend anhand mehrerer Ausführungsbeispiele und unter Bezugnahme auf die Zeichnung näher erläutert. Im Einzelnen zeigen dabei:
- Fig. 1: eine erste Variante des erfindungsgemäßen Konzepts mit Ansteuerung des Ultraschall-Transducers über einen Transformator ohne Mittenanzapfung auf seiner Primärseite, wobei der Strom der für die Erzeugung des Wechselansteuersignals innerhalb eines Intervalls durch Regelung einer (einzigen) Stromquelle realisiert wird,
- Fig. 2: den Verlauf des Stroms während der Erzeugung des Wechselansteuer-signals eines Intervalls für den Transformator und damit mittelbar für den Ultraschall-Transducer,
- Fig. 3: eine Variante zum Konzept nach Fig. 1 mit einer stufenweisen Erhöhung des Stroms für die Erzeugung des Wechselansteuersignals,
- Fig. 4: den Zeitverlauf des Stroms für die Erzeugung des Wechselansteuersignals eines Intervalls,
- Fig. 5: die Variante entsprechend Fig. 1 für den Fall der Verwendung eines Transformators mit primärseitiger Mittenanzapfung und
- Fig. 6: das Konzept nach Fig. 3 für den Fall der Verwendung eines Transformators mit primärseitiger Mittenanzapfung.

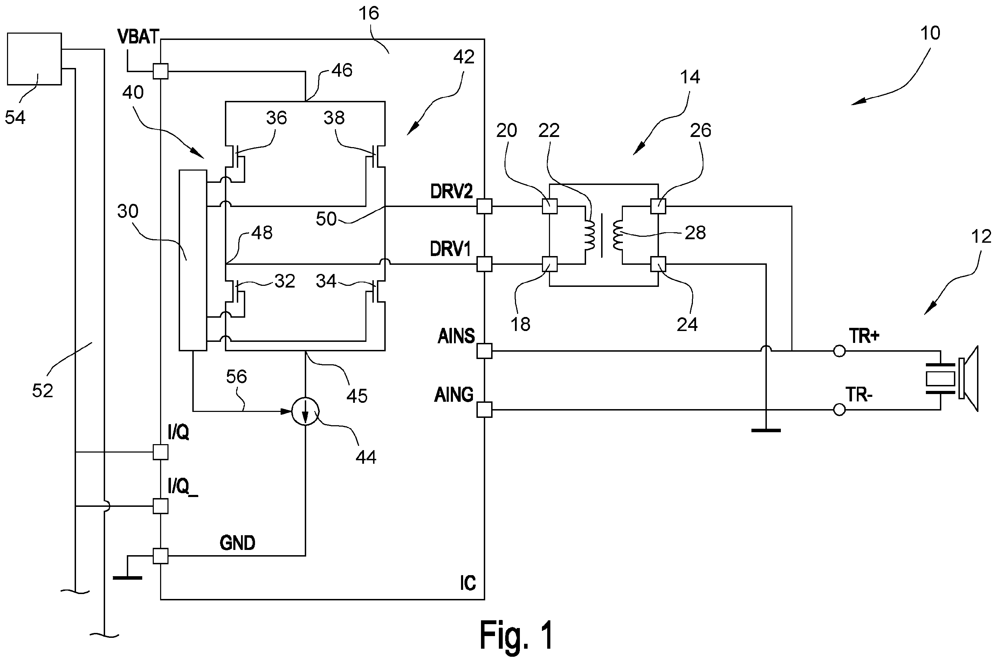

In Fig. 1 ist ein erstes Ausführungsbeispiel der Erfindung wiedergegeben. Zu sehen ist schematisch der Gesamtaufbau eines Ultraschall-Sensors 10, der einen Ultraschall-Transducer 12, einen den Ultraschall-Transducer 12 mit Energie versorgenden Transformator 14 und eine als IC ausgebildete Ansteuereinheit 16 aufweist.

Der Transformator 14 weist einen ersten primärseitigen Anschluss 18 und einen zweiten primärseitigen Anschluss 20 mit einer primärseitigen Spule bzw. Wicklung 22 zwischen diesen beiden Anschlüssen auf. Sekundärseitig weist der Transformator 14 einen ersten Anschluss 24 sowie einen zweiten Anschluss 26 mit einer sekundärseitigen Spule bzw. Wicklung 28 zwischen beiden auf. Die beiden sekundärseitigen Anschlüsse 24, 26 sind mit den Anschlüssen TR- und TR+ des Ultraschall-Transducers 12 verbunden.

Teil der Ansteuereinheit 16 ist eine Schaltersteuereinheit 30 für das Leitend- und Sperrendschalten von insgesamt vier Halbleiterschaltern. Dabei sind der Strompfad eines ersten Low-Side-Halbleiterschalters 32 mit der Strompfad eines ersten High-Side-Halbleiterschalters 36 zu einer ersten Reihenschaltung 40 verbunden, während der Strompfad eines zweiten Low-Side-Halbleiterschalters 34 mit dem Strompfad eines zweiten High-Side-Halbleiterschalters 38 zu einer zweiten Reihenschaltung 42 verbunden ist. Beide Reihenschaltungen sind zwischen einem Versorgungspotential VBAT und in diesem Ausführungsbeispiel einer Stromquelle 44 geschaltet, die ihrerseits mit einem zweiten Spannungspotential GND verbunden ist. Die beiden Low-Side-Halbleiterschalter 32 und 34 sind somit mit einem ersten Schaltungsknoten 45 und die beiden High-Side-Halbleiterschalter 36, 38 sind insoweit mit einem zweiten Schaltungsknoten 46 verbunden. Der Verbindungsknoten 48 der beiden Halbleiterschalter der ersten Reihenschaltung 40 ist als nach außen geführter Anschluss DRV1 der Ansteuereinheit 16 mit dem ersten primärseitigen Anschluss 18 des Transformators 14 verbunden. In entsprechender Weise ist der Verbindungsknoten 50 der Halbleiterschalter der zweiten Reihenschaltung 42 als nach außen geführter Anschluss DRV2 mit dem zweiten primärseitigen Anschluss 20 des Transformators 14 verbunden.

In Fig. 1 ist ferner zu erkennen, dass die beiden Anschlüsse TR+ und TR- des Ultraschall-Transducers 12 mit zwei Anschlüssen AINS und AING der Ansteuereinheit 16 verbunden sind. Über diese beiden IC-Anschlüsse gelangt das elektrische Empfangssignal, das der Ultraschall-Transducer als Reaktion auf ein empfangenes Echo erzeugt, zu nicht mehr gezeigten Schaltungskomponenten zwecks Vorverarbeitung des Empfangssignals, welches nach seiner Vorverarbeitung über die weiteren IC-Anschlüsse (z.B. für die Kommunikation und externe Ansteuerung) I/O und I/O_ nach außen geführt wird beispielsweise über einen Kommunikationsbus 52 an eine zentrale Steuer- und Auswerteeinheit 54.

In Fig. 1 nicht dargestellt sind externe und interne Bauelemente, die für eine Entkopplung der Hochvolt-Ansteuersignale für den Ultraschall-Transducer und dessen Niedervolt-Empfangssignale sorgen. Derartige Maßnahmen und Schaltungskomponenten sind im Zusammenhang mit dem Betrieb von Ultraschall-Transducer grundsätzlich bekannt und bedürfen daher hier nicht weiterer Erläuterungen.

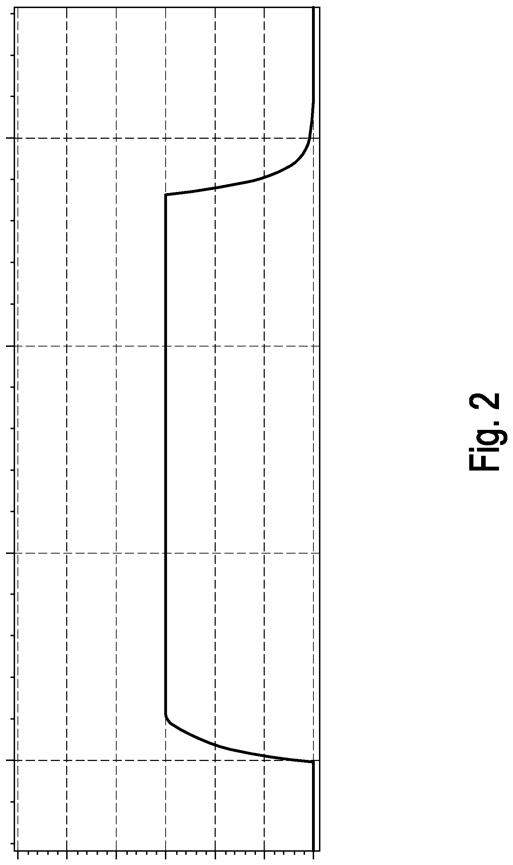

Eine weitere Besonderheit der Erfindung gemäß dem ersten Ausführungsbeispiel ist die Ansteuerung der Stromquelle 44 zum langsamen Hochfahren und Herunterfahren ihrer Stromstärke zwecks Erzeugung des Wechselansteuersignals pro Intervall. Dieses Wechselansteuersignal liegt an den Ausgangsanschlüssen DRV1 und DRV2 an und dient dem Betrieb des Transformators 14. Erfindungsgemäß sieht bei dieser Ausführungsform der Erfindung die Stromverlaufskurve des von der Stromquelle 44 gelieferten Stroms so aus, wie in Fig. 2 gezeigt. Zu diesem Zweck steuert in diesem Ausführungsbeispiel die Schaltersteuereinheit die Stromquelle 44 entsprechend an, was in Fig. 1 durch die Leitung 56 gezeigt ist. Die Stromquelle 44 kann hierfür z.B. spannungsgesteuert sein und einen Operationsverstärker und einen Widerstand aufweisen, womit eine analoge Steuerspannung mittels des Operationsverstärkers über den Widerstand in einen Strom gewandelt wird, dessen Größe mit Hilfe einer Spannung gesteuert wird.

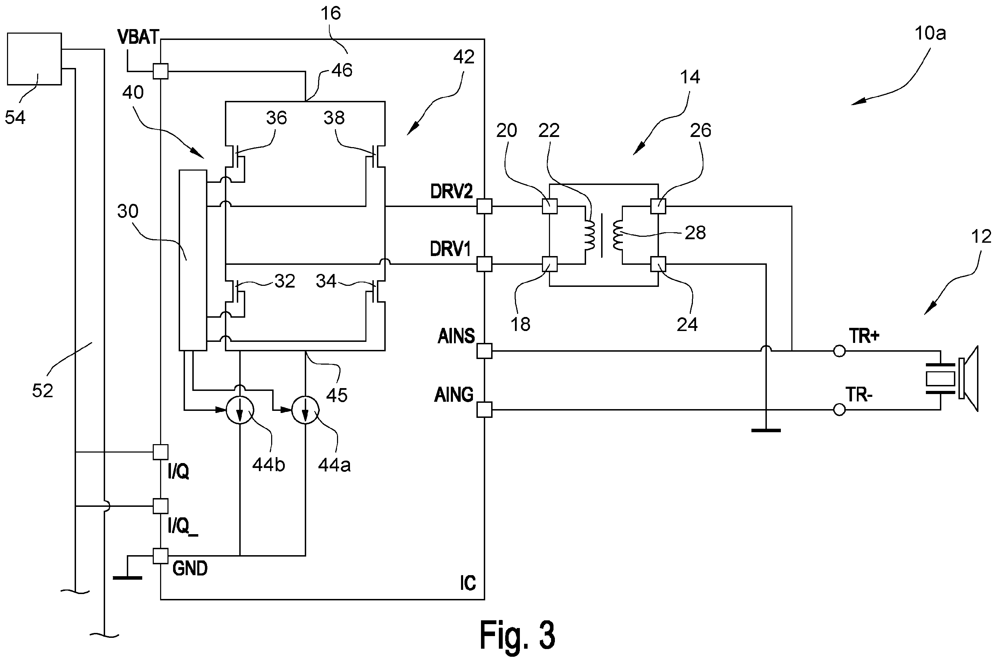

In Fig. 3 ist eine Alternative für die Stromstärkenveränderung mittels Stromquellen gezeigt. Alle übrigen Bestandteile und Komponenten der Konzeption gemäß Fig. 3 gleichen denen der Fig. 1 und sind insoweit in Fig. 3 mit den gleichen Bezugszeichen versehen wie in Fig. 1.

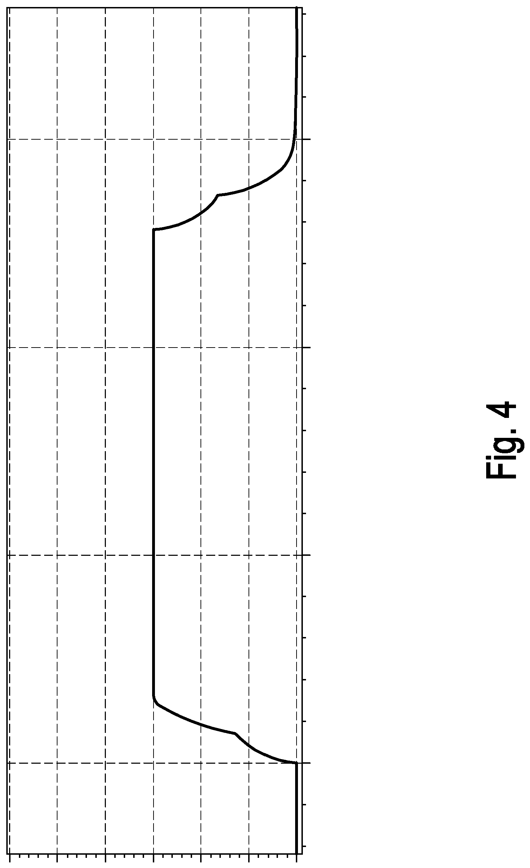

Gemäß Fig. 3 sind zwei Stromquellen 44a und 44b eingesetzt, die sukzessive durch z.B. die Schaltersteuereinheit 30 zu Beginn des Intervalls bzw. zu Beginn der Wechselansteuersignalerzeugung zugeschaltet und zum Ende der Wechselansteuersignalerzeugung abgeschaltet werden. Der Stromverlauf gleicht dann der Kurvenform gemäß Fig. 4.

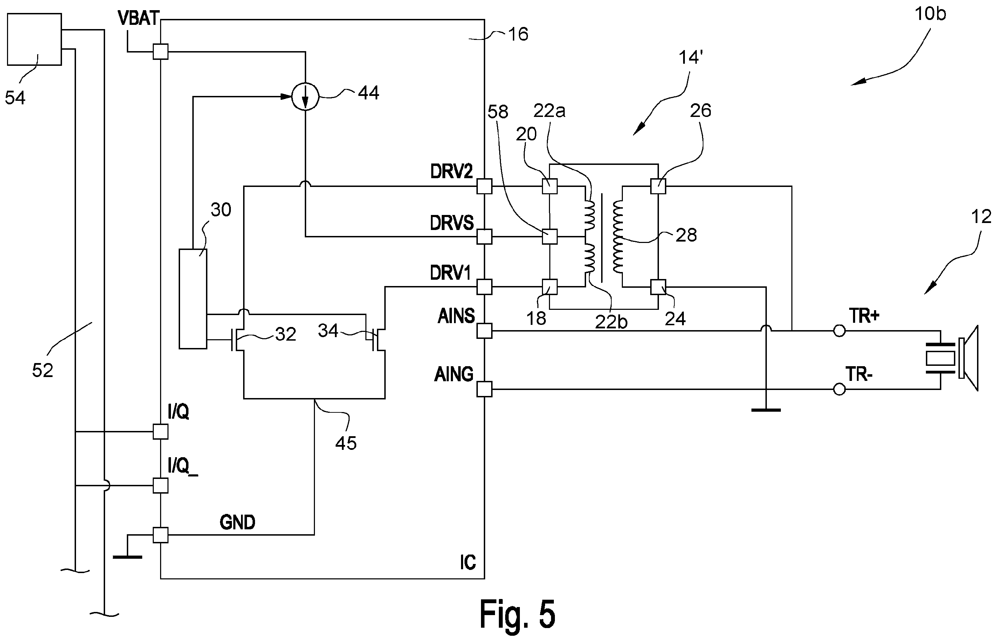

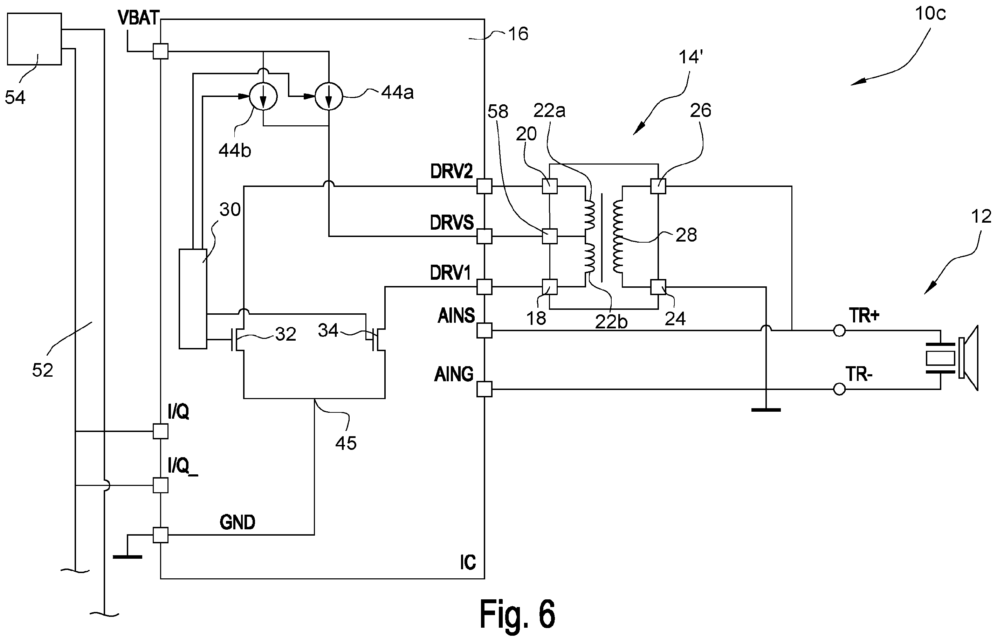

In den Fign. 5 und 6 sind die beiden Alternativen zur Stromstärkenveränderung zu Beginn und zum Ende der Erzeugung eines Wechselansteuersignals mit entweder einer gesteuerten Stromquelle 44 (siehe Fig. 5) oder aber mittels mehrerer (in diesem Ausführungsbeispiel zweier) sukzessive zu- und sukzessive abschaltbaren Stromquellen 44a und 44b (siehe Fig. 6) für den Fall gezeigt, dass statt des Transformators 14 in den Fign. 1 und 3 nun ein Transformator 14' mit primärseitiger Mittenanzapfung 58 verwendet wird. Soweit die übrigen Teile und Komponenten der Konzeption nach den Fign. 5 und 6 denen der Ausführungsformen gemäß den Fign. 1 und 3 entsprechen oder identisch mit diesen sind, sind sie in den Fign. 5 und 6 mit den gleichen Bezugszeichen versehen wie in den Fign. 1 und 3.

Der Transformator 14' der Fign. 5 und 6 weist primärseitig zwei im Wesentlichen identische Spulen 22a und 22b auf, die untereinander verbunden sind und die Mittenanzapfung 58 bilden, die mit einem zusätzlichen Anschluss DRVS der Ansteuereinheit 16 verbunden ist. Über den Anschluss DRVS gelangt der Strom der geregelten Stromquelle 44 zur Mittenanzapfung 58, um dann je nach dem, welcher der beiden Low-Side-Halbleiterschalter 32, 34 eingeschaltet und ausgeschaltet ist, entweder über die primärseitige Spule 22a oder über die primärseitige Spule 22b wechselweise zu einem der primärseitigen Anschlüsse 18, 20 und von dort zu den Anschlüssen DRV1 bzw. DRV2 zu fließen, um schließlich über den jeweils geschlossenen Low-Side-Halbleiterschalter 32, 34 zum Massepotential GND abzufließen.

### Bezugszeichenliste

- 10: Sensor
- 10a: Sensor
- 10b: Sensor
- 10c: Sensor
- 12: Ultraschall-Transducer
- 14: Transformator
- 14': Transformator
- 16: Ansteuereinheit (als IC)
- 18: erster primärseitiger Anschluss
- 20: zweiter primärseitiger Anschluss
- 22: primärseitige Spule bzw. Wicklung
- 22a: primärseitige Spule bzw. Wicklung
- 22b: primärseitige Spule bzw. Wicklung
- 24: erster sekundärseitiger Anschluss
- 26: zweiter sekundärseitiger Anschluss
- 28: sekundärseitige Spule bzw. Wicklung
- 30: Schaltersteuereinheit
- 32: erster Low-Side-Halbleiterschalter
- 34: zweiter Low-Side-Halbleiterschalter
- 36: erster High-Side-Halbleiterschalter
- 38: zweiter High-Side-Halbleiterschalter
- 40: Reihenschaltung
- 42: Reihenschaltung
- 44: Stromquelle
- 44a: Stromquelle
- 44b: Stromquelle
- 45: erster Schaltungsknoten
- 46: zweiter Schaltungsknoten
- 48: Verbindungsknoten
- 50: Verbindungsknoten
- 52: Kommunikationsbus
- 54: zentrale Steuer- und Auswerteeinheit
- 56: Steuerleitung
- 58: Mittenanzapfung
- DRV1: erster Ausgangsanschluss
- DRV2: zweiter Ausgangsanschluss
- DRVS: Anschluss für Mittenanzapfung
- AINS: Empfangssignal-Anschluss
- AING: Empfangssignal Anschluss
- I/O_: Kommunikationsbusanschluss
- I/O: Kommunikationsbusanschluss
- VBAT: Versorgungspotential der Energiequelle
- GND: Massepotential der Energiequelle

## Patentansprüche

1. Vorrichtung zur Ansteuerung eines Ultraschall-Transducers (12) zur Erzeugung von Ultraschallwellen mit
- einer Ansteuereinheit (16) mit Eingangsanschlüssen zur Verbindung mit einer Energiequelle und mit Ausgangsanschlüssen zur Ausgabe eines Ansteuersignals für den Betrieb eines Ultraschall-Transducers (12),
- wobei die Ansteuereinheit (16) ein Wechselansteuersignal, das eine vorgebbare Frequenz und damit eine vorgebbare Periode und eine hinsichtlich ihrer Größe veränderbare Amplitude aufweist, erzeugt und dieses Wechselansteuersignal innerhalb zeitlich vorgebbarer Intervalle und innerhalb jedes Intervalls für eine vorgebbare Anzahl an Perioden ausgibt, und
- wobei pro Intervall
- die Amplitude des Wechselansteuersignals mit dem Beginn seiner Ausgabe über einen Zeitraum von 1 % bis 50 % seiner Anzahl an Perioden oder 5 % bis 50% oder 10 % bis 50% oder 20 % bis 50 % oder 30 % bis 50 % oder 40 % bis 50 % oder 1 % bis 5 % oder 1 % bis 10 % oder 1 % bis 15 % oder 1 % bis 20 % oder 1 % bis 25 % oder 1 % bis 30 % oder 1 % bis 35 % oder 1 % bis 40 % oder 1 % bis 45 % seiner Anzahl an Perioden von einer vorgebbaren ersten Minimalamplitude, die insbesondere Null beträgt, bis zu einer vorgebbaren Maximalamplitude ansteigt und zum Ende der Ausgabe des Wechselansteuersignals hin über mindestens 1 % bis 50 % seiner Anzahl an Perioden oder 5 % bis 50% oder 10 % bis 50% oder 20 % bis 50 % oder 30 % bis 50 % oder 40 % bis 50 % oder 1 % bis 5 % oder 1 % bis 10 % oder 1 % bis 15 % oder 1 % bis 20 % oder 1 % bis 25 % oder 1 % bis 30 % oder 1 % bis 35 % oder 1 % bis 40 % oder 1 % bis 45 % seiner Anzahl an Perioden von der Maximalamplitude bis auf eine vorgebbare zweite Minimalamplitude, die insbesondere Null beträgt, abfällt,
oder
- die Amplitude des Wechselansteuersignals mit dem Beginn seiner Ausgabe über einen Zeitraum von 10 µs bis 50 µs oder von 10 µs bis 100 µs oder von 10 µs bis 200 µs von einer vorgebbaren ersten Minimalamplitude, die insbesondere Null beträgt, bis zu einer vorgebbaren Maximalamplitude ansteigt und zum Ende der Ausgabe des Wechselansteuersignals hin über einen Zeitraum von 10 µs bis 50 µs oder von 10 µs bis 100 µs oder von 10 µs bis 200 µs von der Maximalamplitude bis auf eine vorgebbare zweite Minimalamplitude, die insbesondere Null beträgt, abfällt.

2. Vorrichtung nach Anspruch 1, **gekennzeichnet durch** einen Transformator (14, 14') mit einer Primärseite und einer Sekundärseite, wobei die Ausgangsanschlüsse der Ansteuereinheit (16) mit der Primärseite des Transformators verbindbar und die Sekundärseite des Transformators (14, 14') mit einem Ultraschall-Transducer (12) verbindbar ist.

3. Vorrichtung nach Anspruch 2, **gekennzeichnet durch**
- einen ersten und einen zweiten Low-Side-Halbleiterschalter (34), von denen jeder einen wahlweise leitend oder sperrend schaltbaren Strompfad aufweist,
- wobei der Strompfad des ersten Low-Side-Halbleiterschalters (32) zwischen einem der beiden Low-Side-Halbleiterschaltern (32, 34) gemeinsamen ersten Schaltungsknoten (45) und einem ersten primärseitigen Anschluss (18) des Transformators (14, 14') und der Strompfad des zweiten Low-Side-Halbleiterschalters (34) zwischen dem ersten Schaltungsknoten (45) und einem zweiten primärseitigen Anschluss (20) des Transformators (14, 14') angeordnet ist,
- einen ersten und einen zweiten High-Side-Halbleiterschalter (36, 38), von denen jeder einen wahlweise leitend oder sperrend schaltbaren Strompfad aufweist,
- wobei der Strompfad des ersten High-Side-Halbleiterschalters (36) zwischen einem der beiden High-Side-Halbleiterschaltern (36, 38) gemeinsamen zweiten Schaltungsknoten (46) und dem ersten primärseitigen Anschluss (18) des Transformators (14, 14') und der Strompfad des zweiten High-Side-Halbleiterschalters (38) zwischen dem zweiten Schaltungsknoten (46) und dem zweiten primärseitigen Anschluss (20) des Transformators (14, 14') angeordnet ist,
- wobei die Eingangsanschlüsse der Ansteuereinheit (16) mit den beiden Schaltungsknoten (45, 46) direkt oder indirekt verbunden sind,
- eine Schaltersteuereinheit (30), die die High-Side-Halbleiterschalter (36, 38) und die Low-Side-Halbleiterschalter (32, 34) alternierend leitend und sperrend schaltet und
- wobei die Schaltersteuereinheit (30) innerhalb eines Intervalls in einer Ansteuerphase den ersten High-Side-Halbleiterschalter (36) sowie den zweiten Low-Side-Halbleiterschalter (34) leitend und den zweiten High-Side-Halbleiterschalter (38) sowie den ersten Low-Side-Halb-leiterschalter (32) sperrend schaltet und in einer anderen Ansteuerphase des Intervalls den zweiten High-Side-Halbleiterschalter (38) sowie den ersten Low-Side-Halbleiterschalter (32) leitend und den ersten High-Side-Halbleiterschalter (36) sowie den zweiten Low-Side-Halbleiter-schalter (34) sperrend schaltet und sich diese beiden Ansteuerphasen zur Erzeugung und Ausgabe des Wechselansteuer-signals an den Transformator (14, 14') mehrfach wiederholen.

4. Vorrichtung nach Anspruch 2, **gekennzeichnet durch**
- einen ersten und einen zweiten Low-Side-Halbleiterschalter (32, 34), von denen jeder einen wahlweise leitend oder sperrend schaltbaren Strompfad aufweist,
- wobei der Strompfad des ersten Low-Side-Halbleiterschalters (32) zwischen einem der beiden Low-Side-Halbleiterschaltern (32, 34) gemeinsamen ersten Schaltungsknoten (45) und einem ersten primärseitigen Anschluss (18) des Transformators (14, 14') und der Strompfad des zweiten Low-Side-Halbleiterschalters (34) zwischen dem ersten Schaltungsknoten (45) und einem zweiten primärseitigen Anschluss (20) des Transformators (14, 14') angeordnet ist,
- wobei der Transformator (14, 14') einen weiteren primärseitigen Anschluss aufweist,
- wobei zwischen dem ersten und dem zweiten primärseitigen Anschluss (18, 20) des Transformators (14, 14') eine primärseitige Spule (20, 22a, 22b) angeordnet ist und der weitere primärseitige Anschluss des Transformators (14, 14') mit der Spule in deren Mitte verbunden ist und somit die primärseitige Spule (20, 22a, 22b) in zwei Spulenhälften unterteilt ist,
- wobei der weitere primärseitige Anschluss (18, 20) des Transformators (14, 14') und der erste Schaltungsknoten (45) mit den Eingangsanschlüssen der Ansteuereinheit (16) verbunden sind,
- wobei die Eingangsanschlüsse der Ansteuereinheit (16) mit dem weiteren primärseitigen Anschluss (18 20) des Transformators (14, 14') und dem ersten Schaltungsknoten (45) direkt oder indirekt verbunden sind und
- eine Schaltersteuereinheit (30), die die beiden Low-Side-Halbleiter-schalter (32, 34) wechselweise gegensinnig leitend und sperrend schaltet, womit in der primärseitigen Spule (18, 20) des Transformators (14, 14') wechselweise Strom durch jeweils eine andere der beiden Spulenhälften in entgegengesetzten Richtungen fließt.

5. Vorrichtung nach einem der Ansprüche 1 bis 4, **gekennzeichnet durch** eine Stromquelle (44, 44a, 44b), zur Vorgabe eines die Größe der Amplitude des Wechselansteuersignals bestimmenden Stroms, wobei der Strom der Stromquelle (44, 44a, 44b) pro Intervall für den Anstiege der Amplitude von der ersten Minimalamplitude bis zur Maximalamplitude des Wechselansteuersignals, für die anschließende Beibehaltung der Maximalamplitude des Wechselansteuersignals und für den darauffolgenden Abfall der Amplitude des Wechselansteuersignals von der Maximalamplitude bis zu der zweiten Minimalamplitude steuer- oder regelbar ist.

6. Vorrichtung nach Anspruch 5, **gekennzeichnet durch** ein Tiefpassfilter für die Energieversorgung der Stromquelle (44, 44a, 44b) zur Verzögerung des Anstiegs des Stroms der Stromquelle (44, 44a, 44b) bei deren Aktivierung oder Einschalten zu Beginn eines Intervalls und zur Verzögerung des Abfalls des Stroms der Stromquelle (44, 44a, 44b) bei deren Deaktivierung oder Ausschalten zum oder am Ende des Intervalls.

7. Vorrichtung nach Anspruch 6, **dadurch gekennzeichnet, dass** das Tiefpassfilter extern der Ansteuereinheit (16) angeordnet ist und einen Ausgangsanschluss aufweist, mit dem einer der Eingangsanschlüsse der Ansteuereinheit (16) verbindbar ist.

8. Vorrichtung nach einem der Ansprüche 1 bis 4, **gekennzeichnet durch** mindestens zwei Stromquellen (44, 44a, 44b) zur Vorgabe eines die Größe der Amplitude des Wechselansteuersignals bestimmenden Stroms, wobei die Stromquellen (44, 44a, 44b) pro Intervall für den Anstieg der Amplitude von der ersten Minimalamplitude bis zur Maximalamplitude des Wechselansteuersignals sequentiell zuschaltbar, für die anschließende Beibehaltung der Maximalamplitude des Wechselansteuersignals eingeschaltet bleiben und für den darauffolgenden Abfall der Amplitude des Wechselansteuersignals von der Maximalamplitude bis zur zweiten Minimalamplitude sequentiell abschaltbar sind.

9. Vorrichtung nach Anspruch 1, **dadurch gekennzeichnet, dass** die Ausgangsanschlüsse der Ansteuereinheit (16) ohne Zwischenschaltung eines Transformators mit einem Ultraschall-Transducer verbindbar sind.

10. Vorrichtung nach Anspruch 9, **gekennzeichnet durch**
- einen ersten und einen zweiten Low-Side-Halbleiterschalter (32, 34), von denen jeder einen wahlweise leitend oder sperrend schaltbaren Strompfad aufweist,
- wobei der Strompfad des ersten Low-Side-Halbleiterschalters (32) zwischen einem der beiden Low-Side-Halbleiterschaltern (32, 34) gemeinsamen ersten Schaltungsknoten (45) und einem ersten Ausgangsanschluss (DVR1), der mit dem Ultraschall-Transducer (12) verbindbar ist, und der Strompfad des zweiten Low-Side-Halbleiterschalters (34) zwischen dem ersten Schaltungsknoten (45) und einem zweiten Ausgangsanschluss (DRV2) angeordnet ist, der ebenfalls mit dem Ultraschall-Transducer (12) verbindbar ist,
- einen ersten und einen zweiten High-Side-Halbleiterschalter (36, 38), von denen jeder einen wahlweise leitend oder sperrend schaltbaren Strompfad aufweist,
- wobei der Strompfad des ersten High-Side-Halbleiterschalters (36) zwischen einem der beiden High-Side-Halbleiterschaltern (36, 38) gemeinsamen zweiten Schaltungsknoten (46) und dem ersten Ausgangsanschluss (DRV1) und der Strompfad des zweiten High-Side-Halbleiterschalters (38) zwischen dem zweiten Schaltungsknoten (46) und dem zweiten Ausgangsanschluss (DRV2) angeordnet ist,
- eine Schaltersteuereinheit (30), die in einer Ansteuerphase eines Intervalls eines Ansteuerzyklus den ersten High-Side-Halbleiter-schalter (36) sowie den zweiten Low-Side-Halbleiterschalter (34) leitend und den zweiten High-Side-Halbleiterschalter (38) sowie den ersten Low-Side-Halbleiterschalter (32) sperrend schaltet und in einer anderen Ansteuerphase des Intervalls des Ansteuerzyklus den zweiten High-Side-Halbleiterschalter (38) sowie den ersten Low-Side-Halbleiter-schalter (32) leitend und den ersten High-Side-Halbleiterschalter (36) sowie den zweiten Low-Side-Halbleiter-schalter (34) sperrend schaltet und sich diese beiden Ansteuerphasen zur Erzeugung und Ausgabe des Wechselansteuersignals an den Ausgangsanschlüssen (DRV1, DRV2) mehrfach wiederholen.

11. Vorrichtung nach einem der Ansprüche 1 bis 10, **dadurch gekennzeichnet, dass** die Amplitude des Wechselansteuersignals pro Periode zwischen Null und einem zwischen seiner ersten und/oder zweiten Minimalamplitude einerseits und seiner Maximalamplitude andererseits liegenden Wert wechselt.

12. Vorrichtung nach einem der Ansprüche 1 bis 10, **dadurch gekennzeichnet, dass** die Amplitude des Wechselansteuersignals pro Periode zwischen einem negativen und einem positiven Wert, der jeweils zwischen einerseits seiner ersten und/oder zweiten Minimalamplitude und andererseits seiner Maximalamplitude liegt, wechselt.

13. Vorrichtung nach einem der Ansprüche 1 bis 12, **dadurch gekennzeichnet, dass** pro Intervall die Erzeugung des Wechselansteuersignals für diejenige Dauer, für die zu Beginn der Ausgabe des Wechselansteuersignals dessen Amplitude bis zum Erreichen der Maximalamplitude ansteigt, verlängert wird und die Amplitude des Wechselansteuersignals innerhalb dieser Verlängerung von der Maximalamplitude bis auf die zweite Minimalamplitude abfällt.
